(19) Europäisches Patentamt
European Patent Office
Office européen des brevets

(11) Veröffentlichungsnummer : **0 127 572**
**B1**

(12) # EUROPÄISCHE PATENTSCHRIFT

(45) Veröffentlichungstag der Patentschrift : **28.09.88**

(51) Int. Cl.[4] : **C 23 F 11/16**, C 23 F 11/08, C 02 F 5/14

(21) Anmeldenummer : **84810094.7**

(22) Anmeldetag : **27.02.84**

(54) **Verfahren zur Inhibierung der Korrosion und/oder der Kesselsteinablagerung.**

(30) Priorität : **03.03.83 GB 8305932**
**20.06.83 GB 8316670**

(43) Veröffentlichungstag der Anmeldung : **05.12.84 Patentblatt 84/49**

(45) Bekanntmachung des Hinweises auf die Patenterteilung : **28.09.88 Patentblatt 88/39**

(84) Benannte Vertragsstaaten : **BE DE FR GB IT NL**

(56) Entgegenhaltungen :
**EP-A- 0 074 336**
**DE-A- 2 310 450**
**US-A- 3 032 500**
**PATENTS ABSTRACTS OF JAPAN, Band 4, Nr. 26 (C-1) [508], 6. März 1980, Seite 115 C 1; & JP - A - 55 2718 (NAKAGAWA BOUSHIYOKU KOUGIYOU K.K.) 10.01.1980**

(73) Patentinhaber : **CIBA-GEIGY AG**
**Klybeckstrasse 141**
**CH-4002 Basel (CH)**

(72) Erfinder : **Fisk, Peter Richard, Dr.**
**25 Southmere Avenue**
**Bradford Yorkshire BD7 3NU (GB)**

**EP 0 127 572 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zum Konditionieren von Metall-Oberflächen, um die Korrosion der Metall-Oberflächen und/oder die Ablagerung von Kesselstein darauf zu inhibieren.

In der Britischen Patent-Anmeldung Nr. 2 112 370 A ist eine Methode zur Behandlung eines wässerigen Systems beschrieben worden, um die Korrosion von Metallen, insbesondere eisenartigen Metallen, die mit dem wässerigen System in Kontakt stehen, zu inhibieren und/oder Kesselsteinablagerung aus dem wässerigen System zu verhindern, wobei das wässerige System 0,1 bis 50 000 ppm 2-Hydroxyphosphonessigsäure mit der Formel I

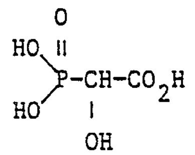 (I)

oder ein wasserlösliches Salz davon enthält.

Geeignete Salze, die in der oben genannten Anmeldung aufgelistet sind, sind wasserlösliche Salze oder Teil-Salze, z. B. eines Alkalimetalles, eines Erdalkalimetalles oder eines $C_1$-$C_{20}$-Alkylamins, welches gegebenenfalls durch eine bis sechs Hydroxylgruppen substituiert ist. Spezifisch aufgelistete Salze sind Salze von Lithium, Natrium, Kalium, Calcium, Strontium, Magnesium, des Ammoniaks; Methylamins, Aethylamins, n-Propylamins, Trimethylamins, Triäthylamins, n-Butylamins, n-Hexylamins, Octylamins, Aethanolamins und Triäthanolamins.

Diese Salze sind bloss als Alternativen zur freien Säureform der 2-Hydroxyphosphonessigsäure aufgelistet : man vermutet nicht, dass irgendwelche synergistischen Effekte erhalten werden könnten, wenn man spezifische Metall-Ionen in Kombination 2-Hydroxyphosphonessigsäure anwendet, noch gibt es irgendeine Vermutung in GB 2 112 370 A dass 2-Hydroxyphosphonessigsäure benutzt werden könnte, um Metalloberflächen gegen Korrosion zu konditionieren, bevor sie einer korrosiven oder kesselsteinbildenden Umgebung ausgesetzt sind.

Es wurde nun gefunden, dass Metall-Obereflächen konditioniert werden können, um ihre Korrosion zu inhibieren und/oder die Kesselsteinablagerung darauf zu unterbinden, indem die Metall-Oberflächen, bevor sie mit einem korrosiven/kesselsteinbildenden System in Berührung kommen, mit 2-Hydroxyphosphonessigsäure oder einem wasserlöslichen Salz davon und einem Metall-Ion behandelt werden.

Weiterhin ist auch überraschenderweise gefunden worden, dass synergistische Effekte auftreten, wenn Metall-Oberflächen, die der Korrosion und/oder Kesselsteinablagerung ausgestzt werden, während des Kontaktes mit einem wässerigen korrosiven kesselsteinbildenden System mit einer Kombination aus 2-Hydroxyphosphonessigsäure und gewissen Metall-Ionen behandelt werden.

Folglich betrifft die vorliegende Erfindung ein Verfahren zum Konditionieren von Metall-Oberflächen, insbesondere Eisen- oder Kupfer- (oder die entsprechenden Legierungen davon)-Oberflächen, um deren Korrosion und/oder die Kesselstein-Ablagerungen darauf zu inhibieren durch :

A) Behandeln besagter Oberflächen, bevor es zum Kontakt mit einer korrosiven oder kesselsteinbildenden Umgebung kommt, mit a) 2-Hydroxyphosphonessigsäure oder einem wasserlöslichen Salz davon und b) einem Metallon aus der Reihe von einem oder mehreren Cobalt-, Eisen-, Barium-, Calcium-, Zink-, Chrom-, Nickel-, Strontium-, Mangan-, Cadmium-, Cer- oder Magnesium-Ionen, oder

B) Behandeln besagter Oberflächen während des Kontaktes mit einem wässrigen System, welches die Metall-Oberflächen korrodieren oder Kesselstein darauf ablagern kann, mit einer Kombination aus :

a) 2-Hydroxyphosphonessigsäure oder einem wasserlöslichen Salz davon und

b) einem Metall-Ion aus der Reihe von einem oder mehreren.Cobalt-, Eisen-, Barium-, Zink-, Chrom-, Nickel-, Mangan-, Cadmium- oder Cer-Ionen.

Die Behandlungen A) und B) können vorteilhaft angewendet werden, indem die Metall-Oberfläche kathodisch polarisiert wird, wobei sie z. B. mit irgendeiner der üblichen Techniken behandelt wird, bei denen der Strom aufgedrückt wird (« impressed current technique »), was beispielsweise in Kapitel 11 von L. L. Schreir, Corrosion, Newnes-Butterworth 1976, zu finden ist.

Bezüglich der Behandlungen, ausgeführt nach Punkt A), kann die zu behandelnde Oberfläche z. B. mit einer wässrigen Lösung aus 2-Hydroxyphosphonessigsäure (oder einem wasserlöslichen Salz davon) in Kombination mit dem Metall-Ion b), in Kontakt stehen, welches in Kombination mit 2-Hydroxyphosphonessigsäure synergistische korrosionsinhibierende und/oder kesselsteininhibierende Effekte bewirkt.

Einige typische Anwendungsbehandlungen A) mit der bevorzugten Anwendung der aufgedrückten Stromtechniken schliessen einen zeitlichen Schutz der Metalloberflächen ein, die korrosiven Atmosphären, z. B. den umgebenden Atmosphären, ausgesetzt sind ; Vorbehandlung der Metalloberflächen, auf die nachfolgend Farbe aufgetragen wird ; Co-Behandlung, um eine phosphatierte Metall-Oberfläche zu versiegeln ; und Formulierung einer Farbe, die 2-Hydroxyphosphonessigsäure (oder ein Salz davon) und das Metall-Ion b) enthält, und wo dann die Farbe auf die zu konditionierende Metall-Oberfläche

aufgetragen wird, z. B. durch Sprayen, Pinseln, Tauchen oder kathodische Elektro-Ablagerung.

In jeder dieser typischen Anwendungsbehandlungen vom Typ A kann die Metall-Oberfläche, z. B. eine phosphatierte Flussstahl (weicher Stahl)-Oberfläche, in eine Lösung enthaltend 2-Hydroxyphosphonessigsäure (oder ein wasserlösliches Salz davon) und ein Metall-Ion b), wie hier bereits früher definiert, eingetaucht werden, oder besagte Lösung kann auf die besagte phosphatierte Metall-Oberfläche gestrichen oder gesprayt werden.

Bezüglich der Versiegelung phosphatierter Metall-Oberflächen ist es übliche Praxis, die Oberfläche von Metallartikeln zu phosphatieren, um eine bindende oder verschliessende Schicht zu bilden, denn eine schützende oder dekorative Farbe bedeckt die Metallartikel, und um die nachfolgende Korrosion unter der Deckschicht zu minimieren. Der Ausdruck « phosphatieren » wird für die Behandlung der Metall-Oberfläche in Lösungen angewandt, die einen Ueberzug bilden, der hauptsächlich aus Metallphosphaten besteht. Während solche Ueberzüge eine gute Befestigung für die Farbdeckschicht bilden, erweisen sie sich im allgemeinen als nicht vollständig zufriedenstellend bei der Inhibition der nachfolgenden Korrosion infolge der Porosität des Phosphatüberzugs. Es ist daher üblicher, besagte Korrosionsinhibition durch Versiegeln des Phosphatüberzugs, üblicherweise durch Eintauchen in eine wässerige Chromatlösung, zu verbessern. Der Gebrauch von Chromatlösungen führt jedoch zu Toxizitäts- und Abwasserproblemen ; daher ist es nötig, neue Versiegelungstechniken zu finden, die die Nachteile vermeiden, welche mit der Chromatversiegelung verknüpft sind. Es wurde gefunden, dass die Anwendung eines Typs A, der gemäss der Erfindung konditioniert wird, eine wirksame Phosphatversiegelung liefert, gegebenenfalls in Kombination mit dem Kathodisieren der phosphatierten Metalloberfläche, und die Probleme vermeidet, die mit den konventionellen Chromatbehandlungen verbunden sind.

Bezüglich einer Technik, wo die Farbe elektrostatisch appliziert wird (electropainting technique), ist der erste Ueberzug mit einer Farbe oder einem Polymer, die auf die Oberfläche der Metallartikel, entweder direkt auf die Metalloberfläche oder nach dem Phosphatieren, aufgebracht werden, üblicherweise eine elektrostatisch applizierte Farbe (electropaint). Elektrostatisch applizierte Farben sind Beschichtungs-Zusammensetzungen, die in Wasser emulgierbar oder löslich sind. Diese Zusammensetzungen lässt man auf eine Metall-Oberfläche durch Polarisierung besagter Metall-Oberfläche, entweder anodisch oder kathodisch bezüglich der jeweiligen anderen Elektrode, entsprechend dem Typ der benutzten Farbe, auftragen. Wenn eine kathodisch angewandte Farbe (electropaint) sich absetzt, kann der Korrosionswiderstand des überzogenen Metalles durch gleichzeitige Konditionierung der Metall-Oberfläche oder Versiegelung des phosphatierten Ueberzugs entsprechend der Typ A-Verkörperung der vorliegenden Erfindung vergrössert werden, indem 2-Hydroxyphosphonessigsäure (oder ein wasserlösliches Salz davon) in Kombination mit dem synergistischen Metall-Ion b) in die elektrostatisch applizierte Farb-Zusammensetzung eingearbeitet wird.

Bei Behandlungen gemäss der Erfindung unter Punkt A oder B kann das Metall-Ion als ein unabhängiges Metallsalz oder als das vorgebildete Salz der Verbindung mit der Formel I oder als eine Kombination von beiden benutzt werden.

Einige Metall-Ionen b) wie Cobalt-, Eisen- und Barium-Ionen, die sehr wirksame synergistische Kombinationen mit der Verbindung der Formel I liefern, sind in der bereits erwähnten Britischen Patent-Anmeldung 2 112 370 A generisch umfasst.

Weiterhin schlägt die obige Britische Patent-Anmeldung nicht vor, dass der Gebrauch der Verbindung mit der Formel I in Form eines wasserlöslichen Salzes zu stark verbesserten Resultaten führen könnte gegenüber solchen, die erhalten werden, wenn die freie Säureform der Verbindung mit der Formel I benutzt wird.

2-Hydroxyphosphonessigsäure ist eine bekannte Verbindung, die bereits im U.S. Patent 3 032 500 beschrieben worden ist, und vor kurzem in der Europäischen Patentanmeldung 27 199. Sie kann mit Hilfe bekannter Methoden hergestellt werden, z. B. durch Reaktion von Orthophosphorsäure, einem Salz oder einer Lösung davon, oder von Phosphortrichlorid (oder $PCl_3$/Wassermischungen) mit Glyoxylsäure, einem Salz oder einer Lösung davon.

Das Verhältnis von 2-Hydroxyphosphonessigsäure (oder einem wasserlöslichen Salz davon) zum Metall-Ion b), die in den korrosions- und/oder kesselstein-inhibierenden Kombinationen benutzt wird, welche bei den erfindungsgemässen Konditionierungsverfahren Anwendung finden, können innerhalb weiter Grenzen, z. B. von 100 : 1 bis 1 : 100 Gewichtsteilen variieren, vorzugsweise aber von 10 : 1 bis 1 : 10.

In der Praxis wird die Menge der Kombination aus 2-Hydroxyphosphonessigsäure und dem Metall-Ion, welche benutzt wird, um die Metall-Oberfläche zu behandeln, beispielsweise durch Hinzufügen der Kombination zum wässerigen System, welches in Kontakt mit der Metall-Oberfläche steht, variieren, was wiederum von der Schutzfunktion abhängig ist, die von der Kombination beim Gebrauch gefordert wird. Für korrosionsinhibierende Schutzbehandlungen, gegebenenfalls in Kombination mit kesselsteininhibierenden Behandlungen, liegt die Menge besagter Kombination, die dem wässerigen System hinzugefügt wird, gewöhnlich innerhalb des Bereiches von 0,1 bis 50 000 ppm (oder 0,00001 bis 5 Gew.-%), vorzugsweise von 1 bis 500 ppm (oder 0,0001 bis 0,05 Gew.-%) und zum Beispiel von 1 bis 100 ppm (oder 0,0001 bis 0,01 Gew.-%), bezogen auf das wässerige System. Für ausschliessliche Antikesselsteinzwecke liegt die Menge besagter Kombination üblicherweise zwischen 1 bis 200 ppm, vorzugsweise zwischen 1 bis 30 ppm, bezogen auf das wässerige System.

In Hinsicht auf die wässerigen Systeme, durch welche eine Metall-Oberfläche gemäss der vorliegenden Erfindung konditioniert werden kann, sind bezüglich der kombinierten Korrosionsinhibitions- und Antikesselstein-Behandlungen Kühlwassersysteme, dampferzeugende Systeme, Seewasser-Verdunster, hydrostatische Kocher, Gaswasch-Systeme, geschlossene Wärmekreisläufe, auf Wasser basierende Kühlsysteme und Erdölfeld-Anwendungen von besonderem Interesse ; für Korrosions-Inhibitions-Behandlungen allein schliessen die wässerigen Systeme, die von besonderem Interesse sind, wässerige Maschinen-Fluid-Formulierungen (z. B. für den Gebrauch beim Bohren, Fräsen, Ausbohren, Nutenziehen, Ziehen, Drücken auf der Drehbank, Drehen, Schneiden, Sägen, Schleifen, Gewindeschneiden oder der nichtspanabhebenden Verformung beim Ziehen und Walzen), wässerige Reinigungssysteme, Maschinenkühlsysteme, wässerige Glycol-Antigefriersysteme, hydraulische Wasser/Glycol-Flüssigkeiten und auf Wasser basierende Oberflächenbeschichtungssysteme ein.

Im besonderem Fall der Inhibierung von Kesselstein und Korrosion bei den Erdölfeld-Anwendungen sind spezielle Probleme vorhanden, auf die man bei den gewöhnlicheren Wasserbehandlungsanwendungen nicht trifft. So erhält das Lagerstätten-Wasser, welches mit den ölführenden Schichten verbunden ist, oft Barium und Strontium, ebenso Ionen, wie Calcium-, Magnesium-, Carbonat- und Bicarbonat-Ionen, die gewöhnlich mehr in Oberflächengewässern und im Seewasser gefunden werden. Daher kann in Situationen, in denen Oberflächen- oder Seewasser mit Lagerstätten-Wasser gemischt wird, eine heftige Kesselsteinbildung infolge Ausfällung von Bariumsulfat, Strontiumsulfat, Calciumcarbonat und Mischungen davon vorkommen. Diese Art der Kesselsteinbildung tritt z. B. während des Kühlens/ der Druckabsenkung (in der Lagerstätte) der wiedergewonnen Rohöl-Wasser-Emulsionen in der Lagerstätte im tieferen Teil des Bohrlochs und im Bohrloch selbst auf, wenn Wasser in die Lagerstätte gepumpt wird, um eine Druckbehandlung vorzunehmen (to « squeeze » a well). Dieser Typ der Kesselsteinbildung kann wirksam durch die Konditionierung-Technik gemäss der vorliegenden Erfindung inhibiert werden.

Um ausserdem die Ablagerung des gewöhnlichen Kesselsteins auf Metall-Oberflächen zu inhibieren, ist das erfindungsgemässe Konditionierungs-Verfahren brauchbar, weil es die Ablagerung von Calcium- oder Magnesiumsilikat-Kesselstein verhindert.

Die synergistische Inhibitorkombination kann auch allein oder in Verbindung mit anderen Verbindungen benutzt werden, von denen bekannt ist, dass sie bei der Behandlung von wässerigen Systemen brauchbar sind.

Vollständig wässerige Systeme, bei denen das Verfahren der vorliegenden Erfindung angewandt werden kann, schliessen Kühlwassersysteme, Klimaanlagensysteme, dampferzeugende Systeme, Seewasser-Verdunstungssysteme, hydrostatische Kocher und geschlossene Wärmekreislauf- oder Kühl-Systeme ein ; weiter können Korrosionsinhibitoren, wie z. B. wasserlösliche Zinksalze ; Phosphate ; Polyphosphate ; Phosphonsäure und ihre Salze ; z. B., Acetodiphosphonsäure, Nitrilotrismethylenphosphonsäure und Methylaminodimethylenphosphonsäure ; andere Phosphonocarbonsäuren und ihre Salze, z. B., jene, die in der Deutschen Offenlegungsschrift 2 632 774, 2-Phosphonobutan-1,2,4-Tricarbonsäure, beschrieben sind, und jene, die in GB-1 572 406 offengelegt sind ; Chromate, z. B. Natriumchromat, Nitrate, z. B. Natriumnitrat ; Nitrite, z. B. Natriumnitrit ; Molybdate, z. B. Natriummolybdat ; Silikate, z. B. Natriumsilikat ; Benzotriazole, 5,5-Methylen-bis-benzotriazol oder Kupfer desaktivierende Benzotriazole oder Tolutriazol-Derivate ; N-Acyl-sarcosine ; N-Acylimino-diessigsäuren ; Aethanolamine ; Fettsäureamine ; und Polycarbonsäuren, z. B., Polymaleinsäure und Polyacrylsäure, ebenso wie ihre jeweiligen Alkalimetallsalze, Copolymere des Maleinsäureanhydrids, Copolymere der Acrylsäure, und substituierte Derivate der Polymalein- und Polyacrylsäuren und ihrer Copolymere.

Weiterhin kann in solchen vollständig wässerigen Systemen die synergistische Inhibitor-Kombination in Verbindung mit weiteren dispergierenden und/oder Antifällungs-Agentien benutzt werden, z. B. polymerisierte Acrylsäure (oder deren Salze), Phosphino-polycarbonsäuren (wie im Britischen Patent 1 458 235 beschrieben), hydrolysiertes Polyacrylnitril, polymerisierte Methacrylsäure und deren Salze, Polyacrylamid und Co-Polymer (davon) von Acryl- und Methacrylsäuren, Ligninsulfonsäure und deren Salze, Tannin, Naphthalin-sulfonsäure/Formaldehyd-Kondensationsprodukte, Stärke und deren Derivate, Cellulose, Acrylsäure/Niederalkylhydroxyacrylat-Copolymere, wie jene, die in der US-Patentschrift Nr. 4 029 577 beschrieben sind, sulfonierte Styrol/Maleinsäureanhydrid-Copolymere, Styrol/Maleinsäureanhydrid-Copolymere und sulfonierte Homopolymere, wie jene, die in der US-Patentschrift Nr. 4 374 733 beschrieben sind, und Kombinationen davon. Spezifische Antifällungs-Agentien, wie z. B. 2-Phosphonbutan-1,2,4-tricarbonsäure, Acetodiphosphonsäure, hydrolysierte Polymaleinanhydrid und dessen Salze, Alkylphosphonsäuren, 1-Aminoalkyl-1,1-diphosphonsäuren und deren Salze und Alkalimetallpolyphosphate, können auch benutzt werden.

Fällungsagentien, wie z. B. Alkalimetallorthophosphate, Carbonate ; Sauerstoff-Spülmittel, wie z. B. Alkalimetallsulfite und Hydrazine ; Sequestriermittel, wie z. B. Nitrilotriessigsäure und deren Salze ; Antischaummittel, wie Silicone, z. B. Polydimethylsiloxane, Distearylsebazinsäureamid, Distearyladipinsäureamid und verwandte Produkte, die von Aethylenoxid- und/oder Propylenoxid-Kondensationen abgeleitet sind, zusammen mit Fettalkoholen, wie z. B. Caprylalkoholen und deren Aethylenoxid-Kondensationsprodukte ; und Biocide, z. B. Amine, quaternäre Ammoniumverbindungen, Chlorphenole, schwefelenthaltende Verbindungen wie Sulfone, Methylen-bis-thiocyanate, und Carbamate, Triazine, Phosphoniumverbindungen, chlorierte und Chlor-freisetzende Agentien und organometallische Verbindungen, wie z. B. Tributylzinnoxid, können benutzt werden.

Wenn das Metall, welches durch das erfinderische Verfahren konditioniert worden ist, mit einem System behandelt wird, welches nicht vollständig wässerig ist, z. B. eine wässerige Maschinen-Fluid-Formulierung, so kann diese z. B. eine mit Wasser verdünnbare Schneid- oder Schleif-Flüssigkeit sein.

Die wässrigen Maschinen-Fluid-Formulierungen der Erfindung können z. B. Metallverarbeitungs-Formulierungen sein. Mit « Metallverarbeitung » meinen wir « Ausbohren, Nutenziehen, Ziehen, Drücken auf der Drehbank, Schmieden, Schleifen, Bohren, Fräsen, Drehen, Sägen, nicht-spanabhebende Verformung oder Walzen ». Beispiele für die wasserlöslichen Schneid- oder Schleifflussigkeiten, in die die korrosionsinhibierende Kombination hineingemischt werden kann, schliessen ein :

a) Wässerige Konzentrate eines oder mehrerer Korrosionsinhibitoren, und gegebenenfalls ein oder mehrere Antiverschleiss-Additive, die bei Verdünnungen von 1 : 50 bis 1 : 100 benutzt werden, die für Schleif-Flüssigkeiten üblich sind.

b) Polyglycole, die Biocide, Korrosionsinhibitoren und Antiverschleissmittel enthalten, die bei Verdünnungen von 1 : 20 bis 1 : 40 für Schneid-Operationen und bei Verdünnungen von 1 : 60 bis 1 : 80 für Schleif-Arbeiten benutzt werden ;

c) Halbsynthetische Schneidflüssigkeiten, die den unter b) genannten ähnlich sind, aber die zusätzlich 10 bis 25 % Oel mit ausreichend viel Emulgator enthalten, um das wasserverdünnte Produkt durchsichtig zu machen.

d) Ein emulgierbares Mineralölkonzentrat, das z. B. Emulgatoren, Korrosionsinhibitoren, Hochdruck (EP)/Antiverschleiss-Additive, Biocide, Antischaumagentien, Kopplungsagentien usw. enthält ; sie werden i.a. von 1 : 10 bis 1 : 50 mit Wasser bis zu einer weisslich undurchsichtigen Emulsion verdünnt ;

e) Aehnliche Produkte wie under d) angegeben, die weniger Oel und mehr Emulgator enthalten und die beim Verdünnen auf Konzentrationen von 1 : 50 bis 1 : 100 durchscheinende Emulsionen für Schneid- oder Schleif-Operationen liefern.

Für jene teilweise wässerigen Systeme, in welchen die wässerige Systemkomponente eine wässerige Maschinen-Fluid-Formulierung ist, kann die synergistische Inhibitor-Kombination einfach oder durch Beimischung von anderen Additiven, z. B. bekannte weitere Inhibitoren und/oder Hochdruck (EP)-Additive, benutzt werden.

Beispiele anderer Korrosionsinhibitoren, die in diesem wässerigen System benutzt werden können, zusätzlich zu der Inhibitor-Kombination, die entsprechend der Erfindung benutzt wird, schliessen die folgenden Gruppen ein :

a) Organische Säuren, deren Ester oder Ammonium-, Amin-, Alkanolamin- und Metallsalze, z. B. Benzoesäure, p-tert.-Butyl-benzoesäure, Dinatriumsebacat, Triäthanolaminlaurat, iso-Pelargonsäure, Triäthanolaminsalz der p-Toluolsulfonamid-capronsäure, Natrium-N-lauroyl-sarcosinat oder Nonyl-phenoxy-essigsäure ;

b) Stickstoff-enthaltende Materialien, wie z. B. die folgenden Typen : Fettsäurealkanolamide ; Imidazoline, z. B. 1-Hydroxyäthyl-2-oleylimidazolin ; Oxazoline ; Triazole, z. B. Benzotriazole ; Triäthanolamin ; Fettsäureamine ; und anorganische Salze, z. B. Natriumnitrat,

c) Phosphor-enthaltende Materialien, wie z. B. die folgenden Typen : Aminphosphate, Phosphonsäuren oder anorganische Salze, z. B. Natriumdihydrogenphosphate oder Zinkphosphat ;

d) Schwefel-enthaltende Verbindungen, wie z. B. die folgenden Typen : Natrium-, Calcium-, oder Barium-, Petrolsulfonate, oder Heterocyclen, z. B. Natriummercaptobenzothiazol.

Stickstoff-enthaltende Materialien, insbesondere Triäthanolamin, sind bevorzugt.

Beispiele für Hochdruck (EP)-Additive, die in den Systemen vorhanden sein können, welche gemäss der vorliegenden Erfindung behandelt werden, schliessen Schwefel und/oder Phosphor und/oder Halogen enthaltende Materialien ein, z. B. sulfoniertes Spermöl, sulfonierte Fette Tritolylphosphat, chlorierte Paraffine oder äthoxylierte Phosphatester.

Wenn Triäthanolamin in den wässerigen Systemen, die entsprechend der vorliegenden Erfindung behandelt werden, vorhanden ist, ist es bevorzugt in einer solchen Mengen vorhanden, dass das Verhältnis der synergistischen Inhibitor-Kombination zum Triäthanolamin von 2 : 1 bis 1 : 20 reicht.

Die teilweise wässerigen Systeme, für die das Verfahren der vorliegenden Erfindung verwendet werden kann, können auch wässerige oberflächenüberziehende Zusammensetzungen, z. B. Emulsionsfarben und wässerige Pulver-Ueberzüge für metallische Substrate sein.

Die wässerige oberflächenüberziehende Zusammensetzung kann z. B. eine Farbe sein, wie eine Styrol-Acryl-Copolymer-Emulsionsfarbe, ein Harz, Latex oder andere auf Wasser basierende polymere oberflächenüberziehende Systeme, die benutzt werden, um ein Metallsubstrat zu überziehen. Die Inhibitorkombination gemäss der vorliegenden Erfindung kann benutzt werden, um schnelles Rosten des Metallsubstrats während der Anwendung des Oberflächenüberzugs und die nachfolgende Korrosion während des Gebrauches des beschichteten Metalls zu verhindern.

In wässerigen oberflächenüberziehenden Zusammensetzungen, die mit dem Verfahren der Erfindung behandelt werden, kann die Inhibitor-Kombination allein oder im Gemisch mit anderen Additiven, z. B. bekannten Korrosionsinhibitoren, Biociden, Emulgatoren und/oder Pigmenten, benutzt werden.

Die weiteren bekannten Korrosionsinhibitoren, die verwendet werden können, sind z. B. jene der Klassen a), b), c) und d), die hierin zuvor schon definiert wurden.

Beispiele für Biocide, die in den erfindungsgemäss behandelten wässerigen Systemen benutzt werden können, schliessen die folgenden ein : Phenole und alkylierte und halogenierte Phenole, z. B.

Pentachlorphenol, o-Phenylphenol, o-Phenoxyphenol und chloriertes o-Phenoxyphenol, und Salicylanilide, Diamine, Triazine und metallorganische Verbindungen, wie Organoquecksilberverbindungen und Organozinnverbindungen.

Beispiele für Pigmente, die in den erfindungsgemäss behandelten wässerigen Systemen benutzt werden können, schliessen Titandioxid, Zinkchromat, Eisenoxid und organische Pigmente, wie die Phthalocyanine, ein.

Die folgenden Beispiele illustrieren ausserdem die vorliegende Erfindung. Die 2-Hydroxyphosphonessigsäure, der aktive Bestandteil, der beim Gebrauch der Beispiele 2 bis 24 benutzt wird, wird wie folgt hergestellt :

## Beispiel 1

A) 16,3 Teile (0,11 Mol) 50 %iger wässeriger Glyoxylsäure und 8,2 Teile (0,1 Mol) Orthophosphorsäure werden zusammen unter Rühren bei 98-100° für 24 Stunden erhitzt und liefern 24,5 Teile 60 %iger 2-Hydroxyphosphonessigsäure.

B) 150 Teile einer 60 %igen Lösung von 2-Hydroxyphosphonessigsäure, die entsprechend Beispiel 1A erhalten wird, werden unter reduziertem Druck (20 mbar) verdampft und geben 104 Teile eines viskosen braunen Oels. Dieses Oel wird zum Auskristallisieren gebracht. Die rohe Kristallmasse wird dann mit Aceton zerrieben, um Unreinheiten zu beseitigen. Die resultierende braungelb gefärbte, kristalline 2-Hydroxyphosphonessigsäure wird durch Filtration entfernt, mit Aceton gewaschen und getrocknet.

Die rohe kristalline 2-Hydroxyphosphonessigsäure, die auf diese Weise erhalten wird, wird dann erneut aus Wasser auskristallisiert und liefert reine 2-Hydroxyphosphonessigsäure als weisse Kristalle mit einem Schmelzpunkt von 165-167 °C.

$^{31}$P-NMR : $\delta = -14$ ppm (relativ zum externen Standard $H_3PO_4$)
$^1$H-NMR : P—C<u>H</u> $\delta = 4{,}24$ cm$^{-1}$.
$J_{P-CH} = 18$ Hz
IR : COOH 1 745 cm$^{-1}$
P = 0 1 200 cm$^{-1}$

## Beispiele 2 bis 8

Die Korrosionsinhibitoraktivität der aktiven Inhibitorkombination wird auf folgende Weise demonstriert : 5 × 2,5 cm Flussstahlplättchen (weicher Stahl) werden mit Bimsstein abgerieben, für eine Minute in Salzsäure getaucht und dann abgespült, getrocknet und gewogen.

Das gewünschte Verhältnis der Additiv-Kombination wird in 200 ml deionisiertem Wasser gelöst. Die Metallionen werden als Chloride hinzugefügt, und alle Testlösungen werden mit Natriumhydroxid auf den pH-Wert 7 eingestellt.

Ein Stahlplättchen, das wie oben aufgeführt, vorbereitet worden ist, wird in die Lösung gehängt, und das Ganze wird in einer geschlossenen Flasche in einem Thermostaten bei 40 °C aufbewahrt. Während des Aufbewahrungszeitraums wird Luft mit einer Geschwindigkeit von 500 ml/Minuten durch die Lösung geleitet, wobei die Luft vom Stahlstück ferngehalten wird ; alle Wasserverluste durch Verdampfen werden mit deionisiertem Wasser ersetzt.

Nach 48 Stunden werden die Stahlplättchen herausgenommen, gerieben, aber ohne Bimsstein zu benutzen, für eine Minute in Chlorwasserstoffsäure, die mit 1 % Gewichtsprozent Hexamin inhibiert ist, getaucht und dann abgespült, getrocknet und gewogen. Es tritt ein gewisser Gewichtsverlust ein. Die Resultate, die in einer Reihe von Tests erhalten werden, wobei jeweils 100 ppm 2-Hydroxyphosphonessigsäure und verschiedene Metall-Ionen benutzt werden, sind in Tabelle I angegeben, in welcher G.Q.D. Milligramm Gewichtsverlust/Quadratdezimeter/Tag bedeutet.

Tabelle 1

| Beispiel | Metall-Ion | Korrosion (G.Q.D) |
|---|---|---|
| Kontrolle | Natrium | 140 |
| Kontrolle | Kalium | 124 |
| 2 | Zink | 1.6 |
| 3 | Cadmium | 2.0 |
| 4 | Mangan. | 2.0 |
| 5 | Cobalt | 2.2 |
| 6 | Nickel | 2.4 |

Tabelle 1 (Fortsetzung)

| Beispiel | Metall-Ion | Korrosion (G.Q.D) |
|---|---|---|
| Kontrolle | Natrium | 140 |
| Kontrolle | Kalium | 124 |
| 7 | Barium | 6.8 |
| 8 | Titan | 84 |

Wenn die obigen Metall-Ionen in den obigen Testmethoden in Abwesenheit von 2-Hydroxyphosphonessigsäure benutzt werden, sind die erhaltenen Korrosionswerte (G.Q.D.) jeweils von der Grössenordnung 80-120.

Beispiele 9 bis 15

Der synergistische Effekt der Kombinationen aus 2-Hydroxyphosphonessigsäure und Metallionen, die entsprechend der Erfindung benutzt werden, wird beurteilt, indem die Abnahme des Kathodenstroms einer Metalloberfläche, die mit der besagten Kombination konditioniert wird, bestimmt wird. Um diese Beurteilung zu erzielen, wird der stationäre Strom der konditionierten Metall-Oberfläche in mit Luft gesättigtem Wasser gemessen.

Eine rotierende Flussstahl-Scheibenelektrode, die mit 4Hz rotiert, wird bei — 800 mV (relativ zu einer Standard-Calomel-Elektrode) in die Test-Lösung gehalten, und der stationäre Strom wird aufgezeichnet, wobei ein üblicher potentiostatischer 3-Elektroden-Stromkreis (three-electrode potentiostatic circuit) benutzt wird.

Die benutzten Testlösungen enthalten 0,1 M Natriumperchlorat als Hintergrundelektrolyt (background electrolyte) und eine der beiden folgenden :

a) 100 ppm 2-Hydroxyphosphonessigsäure, hergestellt wie in Beispiel 1 ; oder

b) 100 ppm 2-Hydroxyphosphonessigsäure (HPAA) und 100 ppm einer Metallionenkomponente (als deren Chloride).

Die Resultate in der folgenden Tabelle II zeigen klar die Abnahme des Stromes, der bei — 800 mV fliesst, wenn 2-Hydroxyphosphonessigsäure in Kombination mit einem Metallion benutzt wird, bezogen auf den Gebrauch von 2-Hydroxyphosphonessigsäure allein.

Tabelle 2

| Beispiel | Inhibitor | Metall-Ion | Kathoden-Strom ($\mu Acm^{-2}$) |
|---|---|---|---|
| | 100 ppm | 100 ppm | |
| | kein | kein | 500 |
| | HPAA | kein | 420 |
| - | - | Eisen | 318 |
| 9 | HPAA | Eisen | 29 |
| - | - | Barium | 487 |
| 10 | HPAA | Barium | 31 |
| 11 | HPAA | Chrom | 60 |
| - | - | Chrom | 474 |

Tabelle 2 (Fortsetzung)

| Beispiel | Inhibitor | Metall-Ion | Kathoden-Strom ($\mu Acm^{-2}$) |
|---|---|---|---|
| 12 | HPAA | Chrom | 101 |
| 13 | HPAA | Mangan | 114 |
| 14 | HPAA | Cadmium | 200 |
| 15 | HPAA | Cer | 270 |

Diese Abnahme des fliessenden Stroms zeigt an :

i) Eine Abnahme der Sauerstoffreduktion an der Metall-Oberfläche mit der folgenden Erwartung, dass es einen Korrelationsgrad zwischen diesen Daten und den Korrosionsinhibitionsdaten aus Beispiel 2, welches sich auf frei korrodierende Metallplättchen bezieht, geben wird. Diese Korrelation wird jedoch nicht vollständig sein, weil das Potential von — 800 mV, das im Test in den Beispielen 9 bis 15 angewandt wird, die Wirkung der anodischen Prozesse unterdrückt ;

ii) Eine Abnahme des Stroms, der erforderlich ist, um die Korrosion durch den Gebrauch eines aufgedrückten kathodischen Stroms zu verhindern ; und

iii) Die Konditionierung der behandelten Metall-Oberfläche durch kathodische Polarisierung in Lösungen von HPAA und HPAA, kombiniert mit synergistischen Metall-Ionen.

Beispiel 16

Ein Flussstahlplättchen (2,5 cm × 5 cm) wird in eine Lösung getaucht, die 100 ppm HPAA und 100 ppm $Ca^{++}$ enthält, und ein Kathodenstrom von 50 $\mu Acm^{-2}$ wird 22 Stunden durch das Plättchen geleitet. Das Plättchen wird dann von der Lösung gereinigt, mit destilliertem Wasser gewaschen und getrocknet.

Das so konditionierte Plättchen wird zusammen mit ähnlichen, sauberen unbehandelten Plättchen nahe dem oberen Ende eines 2 Liter Becherglases, welches 200 ml deionisiertes Wasser enthält, aufgehängt, wobei die Atmosphäre auf 100 % relative Luftfeuchtigkeit und bei 40 °C mittels einer heissen Platte gehalten wird, die unterhalt des Becherglases und einer Kühlschlange, die rund um die obere Hälfte des Becherglases arrangiert ist, plaziert ist. Der Dampf kondensiert auf jedem der aufgehängten Plättchen und verursacht dort Korrosion. Nachdem letztere dem Dampf 24 Stunden lang ausgesetzt sind, ist die Oberfläche der unbehandelten Plättchen mit Rostflecken (0,5 mm) bedeckt. Das Plättchen, das entsprechend dem Verfahren der Erfindung vorkonditioniert wird, ist bis zu einem Ausmass von 80 % frei von Rostflecken. Die restlichen 20 % der Oberfläche des vorkonditionierten Plättchens sind gleichmässig korrodiert aber zu einem weniger tiefen Ausmass als die Kontrollplättchen.

Beispiel 17

Die Kesselsteinbildung auf Metallflächen kann an kathodischen Korrosionsorten initiiert werden. Daher wird ein beschleunigter Test ausgeführt, um die Effektivität von 2-Hydroxyphosphonessigsäure bei der Verhinderung der Kesselsteinbildung durch Wasser, welches Barium-, Strontium- und Sulfat-Ionen enthält, zu demonstrieren, indem ein Flussstahl-Probestück im kesselsteinbildenden Wasser kathodisch polarisiert wird. An das Probestück werden — 800 mV, bezogen auf eine Calomel-Standardelektrode, gelegt, und die Stromänderung und die Aenderung im visuellen Aussehen werden in Bezug auf die Zeit überwacht. Die Testlösung wird bei 40 °C benutzt und besteht aus gleichen Teilen gefilterten Seewassers und einer Lösung der folgenden Salze in deionisiertem Wasser :

| | g/l |
|---|---|
| Calciumchlorid $6H_2O$ | 17,5 |
| Magnesiumchlorid $6H_2O$ | 5,0 |
| Bariumchlorid $2H_2O$ | 0,5 |
| Strontiumnitrat | 1,6 |
| Natriumchlorid | 77,0 |
| Kaliumchlorid | 2,0 |
| Natriumcarbonat | 0,5 |

Während eines 15 Minuten dauernden Testabschnitts wird das Metallprobestück mit einer weissen Schicht von Barium- und Strontiumsulfat überzogen, und der kathodische Strom, der durch das Probestück fliesst, fällt infolge der Bildung einer dünnen Kesselsteinschicht ab. Ein ähnliches Experiment wird ausgeführt, ausgenommen dass man 15 Teile pro Million der 2-Hydroxyphosphonessigsäure zur Testlösung hinzufügt. Der Strom, der durch das Probestück fliesst, fällt wieder infolge der Konditionierung der Metalloberfläche gemäss dem erfindungsgemässen Verfahren ab, aber die Oberfläche bleibt vollständig frei von Kesselstein.

**Patentansprüche**

1. Verfahren zum Konditionieren von Metall-Oberflächen, insbesondere Eisen- oder Kupfer (oder die entsprechenden Legierungen davon)-Oberflächen, um deren Korrosion und/oder die Kesselstein-Ablagerungen darauf zu inhibieren durch

A) Behandeln besagter Oberflächen, bevor es zum Kontakt mit einer korrosiven oder kesselsteinbildenden Umgebund kommt, mit

a) 2-Hydroxyphosphonessigsäure oder einem wasserlöslichen Salz davon und

b) einem Metall-Ion aus der Reihe von einem oder mehreren Cobalt-, Eisen-, Barium-, Calcium-, Zink-, Chrom-, Nickel-, Strontium-, Mangan-, Cadmium-, Cer- oder Magnesium-Ionen, oder

B) Behandeln besagter Oberflächen während des Kontaktes mit einem wässrigen System, welches die Metall-Oberflächen korrodieren oder Kesselstein darauf ablagern kann, mit einer Kombination aus :

a) 2-Hydroxyphosphonessigsäure oder einem wasserlöslichen Salz davon und

b) einem Metall-Ion aus der Reihe von einem oder mehreren Cobalt-, Eisen-, Barium-, Zink-, Chrom-, Nickel-, Mangan-, Cadmium- oder Cer-Ionen.

2. Verfahren gemäss Anspruch 1, worin die zu behandelnden Metall-Oberflächen kathodisch polarisiert werden.

3. Verfahren gemäss Anspruch 1, worin die Metall-Oberfläche bevor es zum Kontakt mit einer korrosiven Umgebung kommt, mit einer wässrigen Lösung aus 2-Hydroxyphosphonessigsäure (oder einem wasserlöslichen Salz davon) und mit einem Metall-Ion b), wie in Anspruch 1 definiert, behandelt wird.

4. Verfahren gemäss Anspruch 3, worin das Metall-Ion b) in Kombination mit 2-Hydroxyphosphonessigsäure synergistische korrosionsinhibierende und/oder kesselsteininhibierende Effekte gibt und in Form eines Metallsalzes verwendet wird.

5. Verfahren gemäss Anspruch 3, wodurch ein zeitweiser Schutz der Metall-Oberflächen, die einer korrosiven Atmosphäre ausgesetzt sind, bewirkt wird durch Vorbehandlung der Metall-Oberflächen, bevor es zum Kontakt mit einer korrosiven Umgebung kommt, durch Anpinseln werden, oder durch Co-Behandlung, wobei die Metall-Oberflächen phosphatiert sind und mit einem Schutzanstrich versehen werden, oder durch Formulierung einer Farbe, die 2-Hydroxyphosphonessigsäure (oder ein wasserlösliches Salz davon) und ein Metall-Ion b) enthält, und darauffolgender Anwendung dieser Farbe auf die zu konditionierende Metall-Oberfläche.

6. Verfahren gemäss Anspruch 1, worin das Verhältnis von 2-Hydroxyphosphonessigsäure (oder einem wasserlöslichen Salz davon) zu Metall-Ion b), wie in Anspruch 1 definiert, innerhalb eines Bereiches von 100 : 1 bis 1 : 100 liegt.

7. Verfahren gemäss Anspruch 6, worin das Verhältnis von 2-Hydroxyphosphonessigsäure (oder einem wasserlöslichen Salz davon) zu Metall-Ion b) zwischen 10 : 1 und 1 : 10 liegt.

8. Verfahren gemäss Anspruch 1, worin die Inhibitor-Kombination a) und b) in einem wässerigen System, das in Kontakt mit einer Metall-Oberfläche steht, welche eine korrosions- und gegebenenfalls eine kesselsteininhibierende Schutzbehandlung erforderlich macht, in einer Menge von 1 bis 500 ppm benutzt wird, bezogen auf das wässerige System.

9. Verfahren gemäss Anspruch 8, worin die Inhibitor-Kombination a) und b) in einer Menge von 1 bis 100 ppm, bezogen auf das wässerige System, eingesetzt wird.

10. Verfahren gemäss Anspruch 1, worin die Inhibitor-Kombination a) und b) in einem wässerigen System, das in Kontakt mit einer Metall-Oberfläche steht, die nur eine kesselsteininhibierende Behandlung erforderlich macht, in einer Menge von 1-200 ppm, bezogen auf das wässerige System, eingesetzt wird.

11. Verfahren gemäss Anspruch 10, worin die Inhibitor-Kombination a) und b) dem wässerigen System in einer Menge von 1 bis 30 ppm, bezogen auf das wässerige System, hinzugefügt wird.

12. Verfahren gemäss Anspruch 10, worin das wässerigen System in Kontakt mit der Metall-Oberfläche steht, die nur ein Korrosionsinhibitions-System erforderlich macht, und eine wässerige Formulierung einer Flüssigkeit bei der Maschinenbearbeitung, ein wässeriges Reinigungssystem, ein wässeriges Glycol-Antigefriersystem, eine hydraulische Wasser/Glycol-Flüssigkeit oder eine auf Wasser basierende Oberflächenbeschichtungs-Zusammensetzung ist.

13. Verfahren gemäss Anspruch 12, worin die wässerige Flüssigkeits-Formulierung bei der Maschinenbearbeitung eine wasserlösliche Schneid- oder Schleif-Flüssigkeit ist.

14. Verfahren gemäss Anspruch 1, worin das wässerige System in Kontakt mit einer Metall-

Oberfläche steht, die eine kombinierte Korrosionsinhibitions- und Antikesselstein-Behandlung erforderlich macht, und ein Kühlwasser-System, ein dampferzeugendes System, ein Seewasser-Verdunster, ein hydrostatischer Kocher, ein Gaswasch-System, ein geschlossenes Wärmekreislauf-System, ein auf Wasser basierendes Kühl-System oder ein Erdölfeld-Anwendungssystem ist.

15. Verfahren gemäss Anspruch 1, worin die Inhibitor-Kombination a) und b) allein oder in Verbindung mit anderen Verbindungen verwendet wird, die als brauchbar bei der Behandlung von vollständig oder teilweise wässerigen Systemen bekannt sind.

16. Verfahren gemäss Anspruch 15, worin das wässerige System ein vollständig wässeriges System ist und ein Kühlwasser-System, ein Klimaanlagen-System, ein dampferzeugendes System, ein Seewasser-Verdunster, ein hydrostatischer Kocher, ein Gaswasch-System oder ein geschlossenes Wärmekreislauf- oder ein Kühl-System, und worin die Inhibitor-Kombination a) und b) in Verbindung mit einem oder mehreren weiteren Korrosionsinhibitoren, einem dispergierenden und/oder Antifällungs-Mittel, einem Ausfällungsmittel, einem $O_2$ bindenden Mittel, einem Sequestriermittel, einem Antischaummittel und einem Biocid verwendet wird.

17. Verfahren gemäss Anspruch 15, worin das teilweise wässerige System eine wässerige Oberflächenbeschichtungs-Zusammensetzung ist, und worin die Inhibitor-Kombination a) und b) in Verbindung mit einem oder mehreren Korrosionsinhibitoren, einem Biocid, einem Emulgator und/oder einem Pigment verwendet wird.

18. Verfahren gemäss Anspruch 15, worin das wässerige System nur teilweise wässerig ist und eine wässerige Flüssigkeit bei der maschinellen Bearbeitung ist, und worin die Inhibitor-Kombination a) und b) in Verbindung mit einem oder mehreren weiteren Korrosionsinhibitoren und/oder einem Hochdruck-Additiv verwendet wird.

19. Verfahren gemäss Anspruch 18, worin der zusätzliche Korrosionsinhibitor Triäthanolamin ist.

20. Verfahren gemäss Anspruch 19, worin Triäthanolamin in einer solchen Menge vorhanden ist, dass das Verhältnis der Inhibitor-Kombination a) und b) zu Triäthanolamin von 2 : 1 bis 1 : 20 reicht.

21. Metall-Oberflächen, konditioniert durch ein Verfahren gemäss Anspruch 1.

**Claims**

1. Process for conditioning metal surfaces, in particular iron or copper surfaces (or surfaces of their corresponding alloys) to inhibit their corrosion and/or to inhibit scale deposition thereon by

A) treating said surfaces prior to contact with a corrosive or scaling environment, with

a) 2-hydroxyphosphonoacetic acid or water-soluble salt thereof and

b) a metal ion from the series of one or more of cobalt, iron, barium, calcium, zinc, chromium, nickel, strontium, manganese, cadmium, cerium or magnesium ions or

B) treating said surfaces during contact with an aqueous system capable or corroding the metal surfaces or depositing scale thereon, with a combination of:

a) 2-hydroxyphosphonoacetic acid or a water-soluble salt thereof and

b) a metal ion from the series of one or more of cobalt, iron, barium, zinc, chromium, nickel, manganese, cadmium or cerium ions.

2. Process according to claim 1, wherein the metal surfaces to be treated are cathodically polarised.

3. Process according to claim 1 wherein the metal surface, prior to contact with a corrosive environment, is treated with an aqueous solution of 2-hydroxyphosphonoacetic acid (or a water-soluble salt thereof) and with a metal ion b), as defined in claim 1.

4. Process according to claim 3, wherein the metal ion b) imparts synergistic corrosion-inhibiting and/or scale-inhibiting effects in combination with 2-hydroxyphosphonoacetic acid, and is used in the form of a metal salt.

5. Process according to claim 3 whereby temporary protection of metal surfaces which are exposed to a corrosive atmosphere is effected by pretreatment of the metal surfaces, prior to contact with a corrosive environment, by painting or by co-treatment, where the metal surfaces are phosphated and provided with a protective coat of paint or by formulating a paint containing 2-hydroxyphosphonoacetic acid (or a water-soluble salt thereof) and a metal ion b), and then applying this paint onto the metal surface to be conditioned.

6. Process according to claim 1 wherein the ratio of 2-hydroxyphosphonoacetic acid (or a water-soluble salt thereof) to metal ion b) as defined in claim 1 is within the range of from 100 : 1 to 1 : 100.

7. Process according to claim 6 wherein the ratio of 2-hydroxy-phosphonoacetic acid (or water-soluble salt thereof) to metal ion b) is between 10 : 1 and 1 : 10.

8. Process according to claim 1 wherein the inhibitor combination a) and b) is used in an aqueous system, in contact with a metal surface which requires corrosion-inhibiting and optionally scale-inhibiting protective treatment, in an amount of from 1 to 500 ppm, based on the aqueous system.

9. A process according to claim 8 wherein the inhibitor combination a) and b) is employed in an amount of from 1 to 100 ppm based on the aqueous system.

10. A process according to claim 1 wherein the inhibitor combination a) and b) is employed in an aqueous system in contact with a metal surface which requires only a scale-inhibiting treatment, in an amount of from 1 to 200 ppm, based on the aqueous system.

11. A process according to claim 10 wherein the inhibitor combination a) and b) is added to the aqueous system in an amount of from 1 to 30 ppm, based on the aqueous system.

12. A process according to claim 10 wherein the aqueous system is in contact with a metal surface which requires only a corrosion inhibition system and is an aqueous machining fluid formulation, an aqueous scouring system, an aqueous glycol antifreeze system, a water/glycol hydraulic fluid or a water-based surface coating composition.

13. A process according to claim 12 wherein the aqueous machining fluid formulation is a water-soluble cutting or grinding fluid.

14. A process according to claim 1, wherein the aqueous system is in contact with a metal surface which requires a combined corrosion inhibition- and anti-scale treatment and is a cooling-water system, a steam-generating system, a sea water evaporator, a hydrostatic boiler, a gas-scrubbing system, a closed-circuit heating system, an aqueous-based refrigeration system or an oil field system.

15. A process according to claim 1 wherein the inhibitor combination a) and b) is used alone or in conjunction with other compounds known to be useful in the treatment of wholly or partly aqueous systems.

16. A process according to claim 15 wherein the aqueous system is a wholly aqueous system and is a cooling-water system, an air-conditioning system, a steam-generating system, a sea-water evaporator, a hydrostatic boiler, a gas-scrubbing system or a closed-circuit heating or refrigeration system and wherein the inhibitor combination a) and b) is used in conjunction with one or more further corrosion inhibitors, a dispersing and/or anti-precipitation agent, a precipitating agent, an oxygen scavenger, a sequestering agent, an anti-foaming agent and a biocide.

17. A process according to claim 15 wherein the partly aqueous system is an aqueous surface-coating composition and wherein the inhibitor combination a) and b) is used in conjunction with one or more corrosion inhibitors, a biocide, an emulsifier and/or a pigment.

18. A process according to claim 15 wherein the aqueous system is only partly aqueous and is an aqueous machining fluid and wherein the inhibitor combination a) and b) is used in conjunction with one or more further corrosion inhibitors and/or an extreme pressure additive.

19. A process according to claim 18 wherein the further corrosion inhibitor is triethanolamine.

20. A process according to claim 19 wherein triethanolamine is present in an amount such that the ratio of inhibitor combination a) and b) to triethanolamine is from 2 : 1 to 1 : 20.

21. Metal surfaces conditioned by a process according to claim 1.

**Revendications**

1. Procédé pour traiter des surfaces métalliques, en particulier des surfaces de fer ou de cuivre (ou leurs alliages correspondants) pour en inhiber la corrosion et/ou empêcher des dépôts de tartre, procédé caractérisé en ce que

A) On traite ladite surface, avant qu'elle ne vienne en contact avec un environnement corrosif et générateur de tartre avec

a) de l'acide hydroxy-2 phosphonacétique ou un sel hydrosoluble de cet acide, et

b) un ion métallique choisi dans le groupe comportant un ou plusieurs ions cobalt, fer, baryum, calcium, zinc, chrome, nickel, strontium, manganèse, cadmium, cérium ou magnésium, ou bien

B) On traite ladite surface pendant son contact avec une composition aqueuse pouvant corroder la surface métallique ou y provoquer le dépôt de tartre, avec une combinaison :

a) d'acide hydroxy-2 phosphonacétique ou d'un sel hydrosoluble de cet acide, et

b) d'un ion de métal choisi parmi un ou plusieurs ions cobalt, fer, baryum, zinc, chrome, nickel, manganèse, cadmium ou cérium.

2. Procédé selon la revendication 1, caractérisé en ce que les surfaces métalliques à traiter sont soumises à polarisation cathodique.

3. Procédé selon la revendication 1, caractérisé en ce que, avant la venue de la surface métallique en contact avec un environnement corrosif, on traite cette surface par une solution aqueuse d'acide hydroxy-2 phosphonacétique (ou d'un sel hydrosoluble de cet acide) et d'un ion de métal b) tel que défini à la revendication 1.

4. Procédé selon la revendication 3, dans lequel l'ion métallique b), en combinaison avec l'acide hydroxy-2 phosphonacétique, exerce des effets synergiques d'inhibition de la corrosion et/ou d'inhibition de la formation de tartre et est utilisé sous forme d'un sel de métal.

5. Procédé selon la revendication 3, dans lequel on effectue une protection temporaire des surfaces métalliques exposées à une atmosphère corrosive, en effectuant le traitement préliminaire des surfaces métalliques, avant qu'elles ne viennent en contact avec un environnement corrosif, par enduction au pinceau ou par co-traitement, en phosphatant les surfaces métalliques et en les munissant d'une couche de peinture protectrice, ou en formulant une peinture qui contient l'acide hydroxy-2 phosphonacétique (ou un sel hydrosoluble de cet acide) et un ion de métal b), et en utilisant ensuite cette peinture sur la surface métallique à traiter pour la protéger.

6. Procédé selon la revendication 1, dans lequel le rapport entre l'acide hydroxy-2 phosphonacétique

(ou un sel hydrosoluble de cet acide) et l'ion métallique b), tel que défini la revendication 1, se situe entre 100 : 1 et 1 : 100.

7. Procédé selon la revendication 6, dans lequel le rapport entre l'acide hydroxy-2 phosphonacétique (ou un sel hydrosoluble de cet acide) et l'ion métallique b), se situe entre 10 : 1 et 1 : 10.

8. Procédé selon la revendication 1, dans lequel on utilise la combinaison inhibitrice a) et b) dans une composition aqueuse, qui vient en contact avec une surface métallique rendant nécessaire un traitement de protection contre la corrosion et éventuellement d'inhibition de la formation de tartre, en une quantité de 1 à 500 ppm, par rapport à la composition aqueuse.

9. Procédé selon la revendication 8, dans lequel on utilise la combinaison inhibitrice a) et b) en une quantité de 1 à 100 ppm, par rapport à la composition aqueuse.

10. Procédé selon la revendication 1, dans lequel on utilise la combinaison inhibitrice a) et b) dans une composition aqueuse qui est en contact avec une surface métallique, ne rendant nécessaire qu'un traitement d'inhibition de la formation du tartre, en une quantité de 1 à 200 ppm, par rapport à la composition aqueuse.

11. Procédé selon la revendication 10, dans lequel on introduit en une quantité de 1 à 30 ppm, par rapport à la composition aqueuse, la combinaison inhibitrice a) et b) dans la composition aqueuse.

12. Procédé selon la revendication 10, dans lequel la composition aqueuse vient en contact avec la surface métallique en ne nécessitant qu'une inhibition de la corrosion et dans lequel une composition ou formulation aqueuse est un liquide servant au traitement d'usinage, une composition aqueuse pour épuration ou purification, une composition aqueuse de circuit anti-gel contenant du glycol, un liquide hydraulique eau/glycol ou une composition à base d'eau pour l'enduction ou le revêtement des surfaces.

13. Procédé selon la revendication 12, dans lequel la formulation de liquide aqueux pour le traitement d'usinage est un liquide hydrosoluble de coupe ou de rectification.

14. Procédé selon la revendication 1, dans lequel la composition aqueuse est en contact avec une surface métallique exigeant un traitement combiné d'inhibition de la corrosion et anti-tartre, et la composition aqueuse est celle d'un circuit d'eau de refroidissement, d'un circuit ou dispositif de production de vapeur d'eau, d'un appareillage d'évaporation de l'eau de mer, d'une chaudière hydrostatique, d'un dispositif de lavage de gaz, d'un dispositif de chauffage à circuit fermé, d'un dispositif de refroidissement à base d'eau ou d'un dispositif applicable dans un champ pétrolifère.

15. Procédé selon la revendication 1, dans lequel on utilise la combinaison inhibitrice a) et b) isolément ou en combinaison avec d'autres composés que l'on sait être utilisables pour le traitement de systèmes ou circuits entièrement ou partiellement aqueux.

16. Procédé selon la revendication 15, dans lequel le système ou composition aqueux est une composition entièrement aqueuse et représente un système ou dispositif de refroidissement par de l'eau de refroidissement, un circuit d'installation de climatisation, un dispositif de production de vapeur d'eau, un évaporateur d'eau de mer, une chaudière hydrostatique, un dispositif de lavage de gaz ou un dispositif de chauffage ou de refroidissement en circuit fermé, et l'on utilise la combinaison inhibitrice a) et b) avec un ou plusieurs autres inhibiteurs de la corrosion, un agent de dispersion ou un agent anti-précipitation, un agent de précipitation, un produit de fixation de $O_2$, un agent de séquestration, un agent anti-mousse ou un biocide.

17. Procédé selon la revendication 15, dans lequel la composition partiellement aqueuse est une composition aqueuse de revêtement de surface, et l'on utilise la combinaison inhibitrice a) et b) en combinaison avec un ou plusieurs inhibiteurs de la corrosion, avec un biocide, avec un émulsifiant et/ou avec un pigment.

18. Procédé selon la revendication 15, dans lequel la composition aqueuse n'est que partiellement aqueuse et est un liquide aqueux servant à l'usinage, et/ou l'on utilise la combinaison inhibitrice a) et b) en combinaison avec un ou plusieurs autres inhibiteurs de corrosion et/ou avec un additif haute pression.

19. Procédé selon la revendication 18, dans lequel l'inhibiteur supplémentaire de la corrosion est la triéthanolamine.

20. Procédé selon la revendication 19, dans lequel la triéthanolamine est présente en une quantité telle que le rapport entre la combinaison inhibitrice a) et b), d'une part, et la triéthanolamine, d'autre part, se situe entre 2 : 1 et 1 : 20.

21. Surfaces métalliques traitées par un procédé de protection selon la revendication 1.